# EUROPÄISCHE PATENTANMELDUNG

(11) **EP 1 191 465 A1**
(43) Veröffentlichungstag der Anmeldung: **27.03.2002**
(21) Anmeldenummer: 00120713.3
(22) Anmeldetag: 22.09.2000
(51) Int. Cl.: G06F 17/50

(54) **Rechnergestützte Konfigurationssysteme und Verfahren**

(71) Anmelder: KERMI GmbH, 94447 Plattling (DE)
(72) Erfinder: Endl, Josef, 94155 Otterskirchen (DE)
(74) Vertreter: Köckeritz, Günter

(57) **Zusammenfassung**

Die Erfindung zeigt ein Expertensystem zur Konfiguration von Sanitärsystemen, vorzugsweise Duschkabinen, welches aufgrund einer vorgegebenen Spezifikation eine technische Repräsentation einer möglichen räumlichen Anordnung, vorzugsweise eine CAD-Zeichnung der notwendigen Komponenten des zu konfigurierenden Sanitärsystems, sowie eine Bauteile-Stückliste dieses Systems ermittelt, mit mindestens einer Informationsverarbeitungseinheit, einem Zuordnungs-und-Auswahl-Modul, einem Konfigurations-Regelverarbeitungs-Modul, und einem Produktions-Regelverarbeitungs-Modul, welche jeweils die erste Informationsverarbeitungseinheit zu ihrem Betrieb verwenden, mindestens einem Speicher **(4, 4a)**, wobei die erste Informationsverarbeitungseinheit Zugriff auf den ersten Speicher hat, und wobei der Speicher **(4, 4a)** oder die Speicher zumindest die folgenden Daten-Bereiche aufweist oder aufweisen, nämlich einen Bauteile-Speicherbereich, einen Konfigurationsdaten-Regel-Speicherbereich, einen Produktionsdaten-Regel-Speicherbereich und einen Aufmaßdaten-Speicherbereich, wobei das Zuordnungs-und-Auswahl-Modul Zugriff auf den Konfigurationsdaten-Speicherbereich hat, das Konfigurations-Regelverarbeitungs-Modul Zugriff auf den Konfigurationsdaten-Regel-Speicherbereich und den Aufmaßdaten-Speicherbereich hat, sowie das Produktions-Regelverarbeitungs-Modul Zugriff auf den Produktionsdaten-Regel-Speicherbereich, den Aufmaßdaten-Speicherbereich und den Bauteile-Speicherbereich hat.

## Beschreibung

Die vorliegende Erfindung betrifft Expertensysteme zur Konfiguration von Sanitärsystemen, vorzugsweise Duschkabinen, und Verfahren zum Betrieb dieser Expertensysteme.
In der technischen Praxis bereitet die Aufnahme und Weitergabe von Daten und Zeichnungen sanitäre Anlagen betreffend, wie etwa Aufmaßduschkabinen, Probleme dergestalt, daß von der Aufmaßnahme über die CAD-Zeichnung bis hin zur Produktkonfiguration, welche eine räumlich zulässige Anordnung der jeweiligen Anlage gewährleisten soll, so komplexe Strukturen und architektonische Details beachtet werden müssen, daß die zu konfigurierenden Anlagen nur noch schwer zu durchschauen sind. Langwierige Berechnungen sowie sich ständig ändernde Detailkenntnisse der zu konfigurierenden sanitären Systeme überfordern meist das Fachwissen der jeweiligen Außendienstmitarbeiter. Weiterhin verlangt die Anpassung sanitärer Anlagen an die räumlichen Gegebenheiten des jeweiligen Kunden von dem Außendienstmitarbeiter eine Vielzahl an technischen Überlegungen, so daß manchmal nicht direkt die Durchführung eines Projektes garantiert werden kann und die Grunddatengenerierung mehrmals durchgeführt werden muß. Dieses kostenintensive Aufmaßverfahren kann bei einer möglichen Fehlkonfiguration noch kostenintensiver werden.
Die Konfiguration von derartigen Sanitärsystemen stellt daher eine Aufgabe dar, die es erfordert, das Wissen über eine Vielzahl von Komponenten mit ihren technischen Daten und darüberhinaus auch über deren mögliches technisches Zusammenwirken ständig abrufbar zu halten und zwar so, daß hieraus jeweils in Bezug auf den Einzelfall (die jeweilige vorgegebene bauliche Situation) die richtige Auswahl von Varianten (Konfigurationen) getroffen werden kann.
Aus den bereits vorstehend erwähnten Gründen ist eine derartige Aufgabe i.d.R. kaum noch durch normale technisch versierte Außendienstmitarbeiter zu lösen. Der Einsatz von Ingenieuren für diese Tätigkeit ist jedoch aus betriebswirtschaftlicher Sicht zu kostenintensiv, so daß sich zur Lösung dieses Problems ein automatisch arbeitendes Konfigurationssystem anbietet.
In anderen Gebieten der Technik, welche gleichfalls komplexe Produkte aufweisen, existieren automatische Lösungsansätze unter Verwendung von Expertensystemen bereits heute:
Bekannt sind regelgestützte Expertensysteme zur technischen Fehlerdiagnose, etwa aus *DE 42 43 087 A1*, die ein Expertensystem für Kfz-Serviceausrüstungen betrifft. Für die automatische Konfigurationsunterstützung technischer Systeme sind jedoch derartige Lösungsansätze, auf denen solch einfachere, ausschließlich regelbasierte Expertensysteme für Diagnose-Aufgaben basieren, nicht ohne weiteres geeignet, da das Wissen über technisch zulässige Konfigurationsvarianten zwar prinzipiell in einer Regelwissensbasis hinterlegt werden kann, diese aber aufgrund des meist ungeheuren Variantenreichtums komplexerer Anlagen nur sehr kostenintesiv zu erstellen und entsprechend schwer zu pflegen ist, da die möglichen Bauteil- und Komponentenvarianten hier die Anzahl der Konfigurationen explosiv in die Höhe schnellen lassen.
Andererseits wäre ein Expertensystem, welches sich zur Konfiguration der vorstehend beschriebenen Systeme eignet, aus den bereits genannten Gründen höchst wünschenswert.
Aufgabe der vorliegenden Erfindung ist es daher, Expertensysteme zur Konfiguration von Sanitärsystemen, vorzugsweise Duschkabinen, und Verfahren zum Betrieb dieser Expertensysteme anzugeben, die es ermöglichen, aufgrund einer Spezifikation eine technische Repräsentation einer möglichen räumlichen Anordnung, vorzugsweise eine CAD-Zeichnung der notwendigen Komponenten des zu konfigurierenden Sanitärsystems, sowie eine Bauteile-Stückliste dieses Systems zu ermitteln, wobei sich jedoch der Aufwand für die Pflege der Wissensbasis über die zu verwendenden Komponenten und ihre zulässigen Konfigurationen in handhabbaren Grenzen halten muß.
Diese Aufgabe wird durch ein Expertensystem zur Konfiguration von Sanitärsystemen, vorzugsweise Duschkabinen, gelöst, welches aufgrund einer vorgegebenen Spezifikation eine technische Repräsentation einer möglichen räumlichen Anordnung, vorzugsweise eine CAD-Zeichnung der notwendigen Komponenten des zu konfigurierenden Sanitärsystems, sowie eine Bauteile-Stückliste dieses Systems ermittelt, mit mindestens einer Informationsverarbeitungseinheit, einem Zuordnungs-und Auswahl-Modul, einem Konfigurations-Regelverarbeitungs-Modul und einem Produktions-Regelverarbeitungs-Modul, wobei diese Module jeweils die erste Informationsverarbeitungseinheit zu ihrem Betrieb verwenden, mindestens einem Speicher, wobei die erste Informationsverarbeitungseinheit Zugriff auf den ersten Speicher hat und wobei der Speicher oder die Speicher zumindest die folgenden Daten-Bereiche aufweist oder aufweisen, nämlich einen Bauteile-Speicherbereich, welcher die zur Konfiguration notwendigen technischen Daten der hierzu verwendbaren Bauteile enthält, vorzugsweise Fertigungsmaße, Gewichte, Bauteiltypen oder Statikdaten der Bauteile, einen Konfigurationsdaten-Speicherbereich, welcher statisches Wissen über die technische Zulässigkeit von Konfigurationsvarianten des zu konfigurierenden Sanitärsytems enthält, und einen Konfigurationsdaten-Regel-Speicherbereich, welcher Regeln enthält, die dynamisches Wissen über die Zulässigkeit von technischen Konfigurationsvarianten des zu konfigurierenden Sanitärsystems repräsentieren, ferner einen Produktionsdaten-Regel-Speicherbereich, welcher Regeln enthält, die dynamisches Wissen über die Zulässigkeit von Produktionsvarianten des zu konfigurierenden Sanitärsystems repräsentieren, und einen Aufmaßdaten-Speicherbereich, welcher elektronisch erfasste Aufmaßwerte und/oder die von dem System erzeugten Aufmaßdaten, vorzugsweise Abmaße der verwendeten Bauteile enthält, wobei das Zuordnungs-und-Auswahl-Modul Zugriff auf den Konfigurationsdaten-Speicherbereich hat, wobei das Konfigurations-Regelverarbeitungs-Modul Zugriff auf den Konfigurationsdaten-Regel-Speicherbereich und den Aufmaßdaten-Speicherbereich hat und das Produktions-Regelverarbeitungs-Modul Zugriff auf den Produktionsdaten-Regel-Speicherbereich, den Aufmaßdaten-Speicherbereich und den Bauteile-Speicherbereich hat.
Bei dem hier vorstehend erläuterten Ansatz wird die Aufblähung der Wissensbasis dadurch verhindert, dass diese in zwei Teile, nämlich einen statischen und einen dynamischen Teil, zerlegt wird.
Hierbei umfasst der statische Teil das Wissen über die Zulässigkeit von Konfigurationen des Systems, welche enumerativ abgelegt und einander zugeordnet werden können, so etwa die sogenannten Umfelddaten, wie Wandschrägen, Wandwinkel, vorstehende Balkenkonstruktionen, Wandfarbe, Armaturenfarbe und/oder Wannen-Bodenfarbe und ihre jeweiligen Zulässigkeitsrelationen untereinander.
Hingegen erfasst der dynamische Teil der Wissensbasis des erfindungsgemäßen Systems Regeln, die auch nicht enumerativ erfassbare Zulässigkeitsbereiche wie etwa Wertebereiche für bestimmte Abmaße, aber auch Zulässigkeitsinformationen über zulässige Konfigurationen umfassen. Dabei wird das Wissen der Entwicklungsexperten über die verfügbaren Komponenten und technischen Möglichkeiten in leicht erstellbaren Regeln hinterlegt und somit den Fachleuten und Außendienstmitarbeitern eine Produktkonfigurationsmöglichkeit geboten, ohne dass sie über Programmierkenntnisse verfügen müssen, gleichwohl aber das so hinterlegte technische Wissen nutzen können.
Durch diese Teilung wird es nunmehr möglich, den Aufwand zur Pflege der Datenbasis entscheidend zu senken, da das Wissen nicht mehr unstrukturiert nur in Form von Regeln vorliegt, deren Beziehungen untereinander im Nachhinein nahezu undurchschaubar werden und die damit nicht mehr zu pflegen sind. Vielmehr wird es damit möglich, das in Regeln abgelegte Wissen auf die unumgänglicherweise nicht statisch (im o.a. Sinne, d.h. nicht enumerativ) beschreibbaren technischen Zusammenhänge zu reduzieren. So werden etwa Informationen über zulässige Abmaßwertebereiche, wie das zulässige Maß der Breite oder Höhe einer Duschkabine oder auch technische Informationen über die Möglichkeit der Konfiguration einer in einer bestimmten Richtung in einem bestimmten Winkel schließenden Tür dergestalt gespeichert. Hierbei wird diese solchermaßen schwieriger zu wartende dynamische Regelwissensbasis durch den statischen Teil von Informationen entlastet, die keiner Hinterlegung in - hinsichtlich ihrer Beziehungen untereinander - unstrukturierten Regeln bedürfen, sondern viel besser enumerativ strukturiert - etwa in untereinander in Relation gesetzten Tabelleneinträgen oder Datensätzen - abgelegt werden.

Zum Betrieb des voranstehend beschriebenen Expertensystems dient dabei ein Verfahren zur Konfiguration von Sanitärsystemen, vorzugsweise Duschkabinen, wobei aufgrund einer vorgegebenen Spezifikation eine technische Repräsentation einer möglichen räumlichen Anordnung, vorzugsweise eine CAD-Zeichnung der notwendigen Komponenten des zu konfigurierenden Sanitärsystems, sowie eine Bauteile-Stückliste dieses Systems ermittelt wird, und wobei zunächst in einem ersten Schritt die technische Spezifikation elektronisch erfasst wird, indem technische Daten, vorzugsweise etwa die Raumgeometrie und/oder Sanitärsystemgeometrie erfasst werden, wobei die Zulässigkeit der jeweiligen technischen Spezifikation anhand der im Konfigurationsdaten-Speicherbereich hinterlegten statischen Zulässigkeitskriterien geprüft und nur technisch erlaubte Konfigurationen zugelassen werden, wodurch eine technisch zulässige statische Konfiguration des Sanitärsystems aus der Spezifikation elektronisch erzeugt wird, in einem zweiten Schritt parallel zum ersten Schritt oder auch nach diesem ersten Schritt die Aufmaßwerte elektronisch erfasst werden, vorzugsweise etwa Länge, Breite, Höhe des zu konfigurierenden Sanitärsystems und hieraus sowie aus der im ersten Schritt ermittelten jeweiligen zulässigen technischen Konfiguration wie auch anhand der im Konfigurationsdaten-Regel-Speicherbereich hinterlegten das dynamische Wissen über die Zulässigkeit von Konfigurationsvarianten des zu konfigurierenden Sanitärsystems repräsentierenden Regeln, Aufmaßdaten elektronisch erzeugt und im Aufmaßdaten-Speicherbereich abgelegt werden, sodann in einem dritten Schritt aus den im zweiten Schritt elektronisch erzeugten Aufmaßdaten und der im Bauteile-Speicherbereich hinterlegten Bauteile-Daten sowie anhand der im Produktionsdaten-Regel-Speicherbereich hinterlegten das dynamische Wissen über die Zulässigkeit von Produktionsvarianten des zu konfigurierenden Sanitärsystems repräsentierenden Regeln eine technische Repräsentation einer möglichen räumlichen Anordnung, vorzugsweise eine CAD-Zeichnung der notwendigen Bauteile des zu konfigurierenden Sanitärsystems, sowie eine Bauteile-Stückliste des zu konfigurierenden Sanitärsystems elektronisch erzeugt werden.
Hierbei wird somit zunächst eine technische Spezifikation elektronisch erfasst, indem technische Daten, vorzugsweise etwa die Raumgeometrie und/oder Sanitärsystemgeometrie, aufgenommen werden, wobei die Zulässigkeit der jeweiligen technischen Spezifikation anhand der im Konfigurationsdaten-Speicherbereich hinterlegten statischen Zulässigkeitskriterien, welche durch ein Zuordnungs- und Auswahl-Modul ausgeführt werden, geprüft und nur technisch erlaubte Konfigurationen zugelassen werden, wodurch eine technisch zulässige statische Konfiguration des Sanitärsystems aus der Spezifikation elektronisch erzeugt wird.
Ganz zu Anfang werden dabei etwa Daten erfasst, die das Umfeld und somit die Rahmenbedingungen des Projektes begrenzen, wie z. B. Wandschrägen, Wandwinkel, vorstehende Balkenkonstruktionen, Wandfarbe, Armaturenfarbe und Wannen-Bodenfarbe.
Die Zulässigkeitsprüfung kann durch Fehlermeldungen geschehen, sie kann aber auch implizit durch das Expertensystem vorgenommen werden, indem nur noch solche Komponenten und Merkmale zur Auswahl bereit stehen, welche unter den Gesichtspunkten der getroffenen Vorauswahl noch zulässig sind. Vorzugsweise wird hier mit dem allgemein bekannten Fenster-Selektionsmechanismus moderner Benutzeroberflächen gearbeitet wie sie auch unter Windows (geschützte Marke) Verwendung finden. Das Konfigurationssystem zeigt dabei in den Auswahlfenstern jeweils die schon ausgewählten Merkmale an und bietet in Abhängigkeit hiervon in den anderen Fenstern zulässige Merkmale zur weiteren Auswahl an.
Hierzu ist der statische Teilbereich der Wissensbasis (Konfigurationsdaten-Speicherbereich) vorzugsweise hierarchisch und besonders bevorzugterweise mehrstufig hierarchisch gegliedert, indem Teile seines Inhaltes jeweils zu Gruppen zusammengefasst sind, die dann u.U. wiederum Verweise auf weitere hiermit technisch kombinierbare Gruppen enthalten.
Als letztes wird jedoch von dem Fachinstallateur oder sonstigen Außendienstmitarbeiter mit Hilfe des Zuordnungs- und Auswahl-Moduls noch ein auf die jeweilige Einbausituation passendes, d. h. ein nach den statischen Informationen im Konfigurationsdaten-Speicherbereich zulässiges elektronisches, Maßblatt ausgewählt.
Des Weiteren werden sodann die Aufmaßwerte elektronisch erfasst, vorzugsweise etwa Länge, Breite, Höhe des zu konfigurierenden Sanitärsystems und hieraus sowie aus der bereits bis dahin zuvor mittels des Zuordnungs- und Auswahl-Moduls ermittelten jeweiligen zulässigen technischen Konfiguration und anhand der im Konfigurationsdaten-Regel-Speicherbereich hinterlegten, das dynamische Wissen über die Zulässigkeit von Konfigurationsvarianten des zu konfigurierenden Sanitärsystems repräsentierenden Regeln, durch das Konfigurations-Regel-Verarbeitungsmodul Aufmaßdaten elektronisch erzeugt und im Aufmaßdaten-Speicherbereich abgelegt. Auch hier wird somit die Zulässigkeit der elektronisch erfassten Daten erneut von einer Informationsverarbeitungseinheit mit Hilfe des Konfigurations-Regel-Verarbeitungsmoduls durch die im Konfigurationsdaten-Speicherbereich hinterlegten Zulässigkeitskriterien überprüft.
Hierbei wird vorzugsweise das elektronische Maßblatt vollständig ausgefüllt, welches sich nach Eingabe des letzten Parameters und nach Datenfreigabe maßstabsgetreu verändert. Wandschrägen werden dabei übertrieben angezeigt, dabei ist der Grad der Verzerrung einstellbar. Die ursprünglichen Grundmaße des Maßblatts werden durch gestrichelte Linien angezeigt, die neuen Linien sind zur Verdeutlichung durch farblich einstellbare Linien gekennzeichnet.
Diese Methode der Ermittlung der Aufmaßdaten durch Expertenregeln und durch eine statische Datenbank, in der eben nur technische Datensätze und ihre Relationen untereinander als Zulässigkeitsinformation technischer Konfigurationen abgelegt sind, ermöglicht eine ungleich bessere Pflege der Wissensbasis im Wege der Wartung der leicht strukturierbaren statischen Wissenskomponente sowie infolgedessen eine Reduzierung des Umfanges der dynamischen Datenbasis und daher auch einen ungleich schnelleren Zugriff auf das vor Ort gefragte Wissen als Methoden, welche nur regelorientiert arbeiten, so dass Projekte meist augenblicklich auf ihre technische Zulässigkeit (Durchführbarkeit) geprüft werden können.
Hiernach werden aus den elektronisch erzeugten Aufmaßdaten und der im Bauteile-Speicherbereich hinterlegten Bauteile-Daten sowie anhand der im Produktionsdaten-Regel-Speicherbereich hinterlegten, das dynamische Wissen über die Zulässigkeit von Produktionsvarianten des zu konfigurierenden Sanitärsystems repräsentierenden Regeln sowohl eine technische Repräsentation einer möglichen räumlichen Anordnung, vorzugsweise eine CAD-Zeichnung der notwendigen Bauteile des zu konfigurierenden Sanitärsystems sowie eine Bauteile-Stückliste des zu konfigurierenden Sanitärsystems elektronisch erzeugt.
Der erste und/oder zweite Schritt des Verfahrens kann beliebig oft iteriert werden und zwar jeweils unmittelbar als auch unter Zwischenschaltung einer Iteration des jeweils anderen Schrittes.
So vergleicht der Außendienstmitarbeiter etwa nach Erzeugung der Aufmaßdaten die vor Ort elektronisch erfasste Situation mit der tatsächlich vorliegenden Situation. Er korrigiert elektronisch evtl. einzelne Parameter, sofern eine Abweichung augenscheinlich wird. Stimmen Einbausituation und erfasste Situation überein, dann löst er wiederum die automatische Ermittlung der Aufmaßdaten aus.
Vorzugsweise besteht die Möglichkeit, diese automatische Ermittlung der Aufmaßdaten durch Vorauswahl einer Serie bzw. durch Eingabe einer maximal möglichen Festfeldbreite einzuschränken.
Zusätzlich besteht im Rahmen der Iteration dann auch die Möglichkeit, mit Hilfe des Auswahl- und Zuordnungs-Moduls, durch Vorauswahl - im Rahmen der statischen Konfigurationsdaten aus dem Konfigurationsdaten-Speicherbereich - eine bestimmte Hausserie aus einem Listenfeld auszuwählen. Dazu ist in einer Tabelle die Zuordnung der Duschkabinenseriennamen der Hausmarken zu den Duschkabinenseriennamen Kermi (z.B. Kermi IBIZA 2000 = R&F EUROPA) hinterlegt. Eine womögliche Bruttopreisfindung bleibt dadurch unverändert. Vorzugsweise erfolgt auch eine Auflistung aller auf die Einbausituation passenden Ausführungen, gruppiert nach Dichtheitsklasse und nach Preislistenreihenfolge sortiert.
Dabei kann hinter jeder Ausführung ein Bild der entsprechenden Serie hinterlegt werden. Der Außendienstmitarbeiter, etwa ein Fachinstallateur, führt die Kundenberatung durch und wählt eine Ausführung innerhalb einer Dichtheitsklasse aus. Nur die mit den eingegebenen Daten konsistenten Dichtheitsklassen stehen sodann dem Fachinstallateur zur Auswahl bereit. Sodann erscheint im elektronischen Maßblatt vorzugsweise eine graphische Anzeige einer der Einbausituation maßstäblich angepassten Ausführung in einer stilisierten Form, so dass die gewählte Serie eindeutig zu erkennen ist. Hierdurch wird auch das Vorstellungsvermögen des Kunden - durch mündliche Beschreibung oftmals nur schlecht angeregt - durch die Anzeige von graphischen Darstellungen unterstützt. Eine allzu häufige Änderung seiner Wünsche und der damit einhergehende Zeitmehraufwand kann damit weitgehend vermieden werden.
Die sofortige Umsetzung der aufgenommenen Daten in eine graphische Anzeige und damit die visuelle Unterstützung, nicht nur für den Fachinstallateur, sondern auch für den Kunden, sowie die Möglichkeit, jederzeit Änderungen elektronisch erfassen zu können, wobei sich auch hier die graphische Anzeige gleich mit verändert, sind wichtige elektronische Konfigurationsmittel zur endgültigen Bestimmung der Aufmaßdaten.
Zu dem vorstehend beschriebenen Zweck ist bei dem erfindungsgemäßen Expertensystem vorzugsweise ein Graphik-Modul vorgesehen, welches Mittel zur parameterweisen elektronischen Erfassung der Aufmaßwerte und
Mittel zur Erzeugung und/oder Anpassung einer graphischen Repräsentation, vorzugsweise einer technischen Skizze oder Zeichnung, des zu konfigurierenden Sanitärsystems anhand der elektronisch erfassten Aufmaßwerte aufweist.
In einer weiteren bevorzugten Ausführung des Expertensystem zur Konfiguration von Sanitärsystemen nach der vorliegenden Erfindung ist ein Eingabe-Modul zur Erfassung der Aufmaßwerte über eine Tastatur vorgesehen. Die elektronisch erfassten Aufmaßwerte können aber auch durch graphisch orientierte Eingabemittel, wie etwa eine Maus, ein Touchpad oder andere Eingabegeräte erfolgen.
Vorzugsweise ist dabei das Expertensystem zur Konfiguration von Sanitärsystemen dadurch gekennzeichnet, dass die Tastatur oder das graphisch orientierte Eingabemittel während der elektronischen Erfassung der Aufmaßwerte so auf das Mittel zur Erzeugung und/oder Anpassung einer graphischen Repräsentation einwirkt, dass die jeweilige graphische Repräsentation unmittelbar entsprechend den elektronisch erfassten Aufmaßwerten angepasst wird. So können Änderungen schnell optisch vom Fachinstallateur überprüft werden.
Weiterhin kann das Expertensystem zur Konfiguration von Sanitärsystemen ein Kollisionsprüf-Modul aufweisen, welches Mittel zur elektronischen Erfassung von geometrischen Umfelddaten und Mittel zur Kollisionsprüfung von beweglichen Komponenten des zu konfigurierenden Sanitärsystems mit Fremdkomponenten aufweist, wobei die Fremdkomponenten durch die elektronisch erfassten Umfelddaten charakterisiert sind. Hierdurch werden mögliche, nicht leicht überschaubare Fehler vermieden, wie z. B. Türen, die nicht mehr vollständig geöffnet werden können, oder nicht mehr voll funktionstüchtige Schubladen. Auch bei der Planung zukünftiger Einbauteile, z. B. Schränke, Kommoden usw., leistet das Kollisionsmodul wichtige technische Unterstützung. Als einfachste Form eines solchen Kollisionsprüfmoduls eignet sich etwa eine graphische Darstellung, die die in ihr enthaltenen beweglichen Objekte zumindest in ihren End- bzw. Extremlagen und vorzugsweise auch in Zwischenschritten entlang ihrer jeweiligen Bewegungsachsen darstellt, wodurch Kollisionen mit anderen Objekten offenbar werden.
Hierzu können in einem Zwischenschritt nach dem ersten Schritt und vor dem dritten Schritt geometrische Umfelddaten elektronisch erfasst werden, welche Fremdkomponenten charakterisieren, die sich im geometrischen Umfeld des Sanitärsystems befinden. Sodann kann anhand dieser Umfelddaten eine elektronische Kollisionsprüfung von beweglichen Komponenten des zu konfigurierenden Sanitärsystems mit den Fremdkomponenten mit dem Kollisionsprüfmodul durchgeführt werden.
Die nun solchermaßen elektronisch erfassten Aufmaßdaten werden von der Informationsverarbeitungseinheit mit Hilfe des Produktionsdaten-Regelverabeitungsmoduls und den im Produktionsdaten-Regelspeicherbereich hinterlegten Regeln sowie im Bauteile-Speicherbereich hinterlegten Daten zu den Produktionsdaten als Bauteile-Stückliste und als technische Repräsentation einer möglichen räumlichen Anordnung, vorzugsweise als CAD-Zeichnung der notwendigen Bauteile des zu konfigurierenden Sanitärsystems, elektronisch verarbeitet.
Das Produktionsdaten-Regel-Verarbeitungs-Modul ordnet hierbei vorzugsweise den Aufmaßdaten in diesem Schritt die genauen Materialien, Materialstärken sowie die Anzahl und Größe weiterer Bauteile zu, die im Bauteile-Speicherbereich hinterlegt sind. Die hierzu nötigen Regeln aus dem Produktionsdaten-Regelspeicherbereich sind immer zu aktualisieren, da sowohl die Entwickler und Konstrukteure als auch die Logistiker die sich ständig ändernden Rahmendaten nicht nur auf technische Zulässigkeit, sondern auch auf Verfügbarkeit der zu beschaffenden Materialien und
Komponenten prüfen. So können etwa ebenfalls auch Lagerdaten ein Bestandteil der durchzuführenden Selektion sein.
Vorzugsweise kann auch dieser dritte Schritt des erfindungsgemäßen Verfahrens beliebig oft iteriert werden; und zwar sowohl unmittelbar hintereinander als auch unter Zwischenschaltung einer Iteration des ersten und/oder zweiten Schrittes.
Vorzugsweise ist es ebenso möglich nach dem dritten Schritt Änderungen der Bauteile-Stückliste elektronisch zu erfassen, etwa um im Falle von Lieferengpässen sonst üblicherweise zu beschaffender Bauteile auf ein anderes Produkt als Bauteil zurückgreifen zu können.
Im Anschluss hieran ist es vorzugsweise auch möglich, aus der ermittelten Bauteile-Stückliste und den anderen Rahmenbedingungen nach Übermittlung der Daten durch eine Standardschnittstelle sogleich eine Kalkulation zu erstellen und nach Rückfrage, ebenfalls durch eine geeignete Schnittstelle leicht realisierbar, einen Liefertermin zu bestimmen.
Die Daten können dann als Informationen für weitere kaufmännische und betriebswirtchaftliche Datenverarbeitungssysteme oder Managementsysteme, wie etwa SAP (geschützte Marke), genutzt werden.

In einer besonders bevorzugten Ausführungsform ist das Expertensystem zur Konfiguration von Sanitärsystemen dadurch gekennzeichnet, dass das Expertensystem mindestens einen zweiten Speicher und eine zweite Informationsverarbeitungseinheit aufweist und die zweite Informationsverarbeitungseinheit Zugriff auf den zweiten Speicher hat, wobei die beiden Informationsverarbeitungseinheiten zumindest zeitweise miteinander gekoppelt sind und der Konfigurationsdaten-Speicherbereich und der Konfigurationsdaten-Regel-Speicherbereich in dem ersten Speicher und der Bauteile-Speicherbereich und der Produktionsdaten-Regel-Speicherbereich in dem zweiten Speicher liegen. Dabei laufen vorzugsweise die ersten beiden Schritte des Verfahrens nach der vorliegenden Erfindung auf der ersten Informationsverarbeitungseinheit und der dritte Schritt auf der zweiten Informationsverarbeitungseinheit ab, wobei während der Kopplung der beiden Informationsverarbeitungseinheiten die Aufmaßdaten aus dem Aufmaßdaten-Speicherbereich, auf den die erste Informationsverarbeitungseinheit Zugriff hat, in einen weiteren Aufmaßdaten-Speicherbereich, auf den die zweite Informationsverarbeitungseinheit Zugriff hat, übertragen werden.
Hierbei laufen alle oben erwähnten Schritte bis zur Erstellung der Aufmaßdaten auf der ersten Informationsverarbeitungseinheit ab. Die Produktionsdatengenerierung aus den Aufmaßdaten laufen mit Hilfe der zweiten Informationsvearbeitungseinheit ab. Dabei muss die zweite Informationsverarbeitungseinheit zumindest zeitweise Zugriff auf die Aufmaßdaten haben. Vorzugsweise wird hierbei mit vollkommen getrennten Informationsverarbeitungseinheiten (CPU's) gearbeitet, von denen die erste mobil ist und alle notwendigen Daten und Module enthält, die zur Datenermittlung beim Kunden nötig sind. Die zweite Informationsverarbeitungseinheit kann stationär an einem beliebigen Ort, etwa der Firmenzentrale, gelegen sein, wo alle wertvollen Informationen zentral geschützt und gepflegt werden können.

Eine vorzugsweise Ausführung sieht vor, dass die erste Informationsverarbeitungseinheit mit den dazugehörigen Speichern und den dazugehörigen Modulen bei den Außendienstmitarbeitern, etwa den Fachinstallateuren, vorliegt, während die zweite Informationsverarbeitungseinheit auf einer leistungsfähigeren und speziell abgesicherten Maschine liegt.
Beispielsweise können speziell eingerichtete Laptops an Fachinstallateure verteilt und die zweite Informationsverarbeitungseinheit als ein leistungstarker Server eingerichtet werden, auf den die Entwickler leichte Zugriffsmöglichkeiten haben, jedoch nur im Rahmen ihrer jeweiligen Zugriffsrechte.
Diese Ausführungsart lässt den Austausch oder die Änderung des Produktionsdaten-Regel-Verarbeitungs-Moduls und des Produktion-Daten-Regelspeicherbereiches die Produktionsdatengenerierung betreffend zu, ohne dass die erste Informationsverarbeitungseinheit und die dazugehörigen Speicher und Module benötigt werden. Dadurch wird die Datensicherheit (Preislisten, Produktionsdaten, Einkaufsquellen, Beschaffungspreise, Kalkulationen sind unter anderem sehr sensible Daten, die für den Betreiber des erfindungsgemäßen Systems schützenswert sind) sichergestellt und die Zeitverluste bei nötigen Updates, das Produktionsdaten-Regel-Verarbeitungs-Modul betreffend sowie der Aufwand für Datenbankänderungen, den Produktions-Regelspeicherbereich betreffend, minimiert.
Zu den vorstehend beschriebenen Ausführungsformen von Expertensystemen und Verfahren zu deren Betrieb nach der vorliegenden Erfindung, welche von dem Vorhandensein mindestens eines zweiten Speichers und einer zweiten Informationsverarbeitungseinheit ausgehen und wobei die beiden Informationsverarbeitungseinheiten zumindest zeitweise miteinander gekoppelt sind, ist der Klarstellung halber anzumerken, dass diese besagten Ausführungsformen auch unabhängig davon, ob die Wissensbasis in eine statische oder dynamische Komponente zerlegt wird, zu den bereits für diese Ausführungsformen erwähnten Vorteilen führen, sofern nur der Konfigurationsprozess, welcher die Aufmaßdaten erzeugt, sich einer anderen Informationsverarbeitungseinheit bedient, als der Prozess der Erzeugung der Produktionsdaten (etwa Bauteile-Stückliste und Kosntruktionszeichnung für die Produktion [CAD-Zeichnung]).
Auch sei erwähnt, dass sich sich die hier beschriebenen Ausführungsformen des erfindungsgemäßen Verfahrens jeweils als Computerprogrammprodukt eignen, welches ein computerlesbares Medium mit Computerprogramm-Code-Mitteln aufweist und bei dem nach Laden des Computerprogramms der Computer durch das Programm zur Durchführung der hier beschriebenen Ausführungsformen des erfindungsgemäßen Verfahren veranlasst wird.

Im Folgenden werden nicht einschränkend zu verstehende Ausführungsbeispiele anhand der Zeichnung besprochen. Es zeigen:
- Fig. **1**: den Ablauf einer Ausführungsform des erfindungsgemäßen Verfahrens anhand einer schematischen Darstellung,
- Fig. **2**: den Aufbau des Expertensystems ohne getrennte Informationsverarbeitungseinheiten gleichfalls in einer Schemadarstellung und
- Fig. **3**: den Aufbau des Expertensystems mit getrennten Informationsverarbeitungseinheiten ebenfalls schematisch.

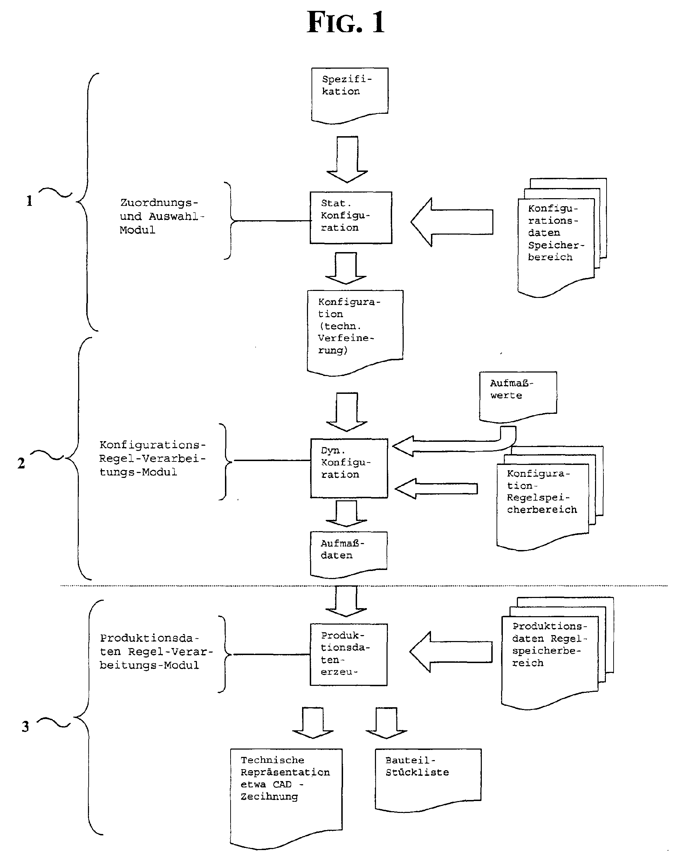

Fig. 1 zeigt den Ablauf einer Ausführungsform des erfindungsgemäßen Verfahrens anhand einer schematischen Darstellung. Nach Erteilung eines Aufmaßauftrages erscheint der Fachinstallateur beim Kunden. Folgende Ausstattung führt er dabei mit:
■ Aufmaßwerkzeug,
■ Laptop mit der Software,
■ Drucker,
■ Aktuelle Preisliste,
■ Schablonen.

Er nimmt sodann sein Notebook in Betrieb, um das erfindungsgemäße Expertensystem zu starten. Das Notebook (Laptop-Computer) enthält dabei alle erforderlichen Komponenten des erfindungsgemäßen Expertensystems zur Durchführung der Schritte eins **1** und zwei **2** des erfindungsgemäßen Verfahrens, nämlich eine erste Informationsverarbeitungseinheit, ein Zuordnungs- und-Auswahl-Modul und ein Konfigurations-Regelverarbeitungs-Modul, welche jeweils die erste Informationsverarbeitungseinheit zu ihrem Betrieb verwenden, sowie einen ersten Speicher **4**, wobei die erste Informationsverarbeitungseinheit Zugriff auf diesen ersten Speicher **4** hat, und der Speicher **4** zumindest die folgenden Daten-Bereiche aufweist, nämlich einen Konfigurationsdaten-Speicherbereich, einen Konfigurationsdaten-Regel-Speicherbereich und einen Aufmaßdaten-Speicherbereich, wobei das Zuordnungs-und-Auswahl-Modul Zugriff auf den Konfigurationsdaten-Speicherbereich und das Konfigurations-Regelverarbeitungs-Modul Zugriff auf den Konfigurationsdaten-Regel-Speicherbereich und den Aufmaßdaten-Speicherbereich hat.
Danach startet er den Ablauf des Schritte eins **1** und zwei **2** des erfindungsgemäßen Verfahrens:
Nach elektronischer Erfassung der Projektdaten für den Kunden sowie der Auswahl des jeweiligen Installationsbetriebes wird dem Projekt anhand eines Schlüssels eine dem Aufmaßdatensatz zugehörige Aufmaßnummer generiert. Nun werden im ersten Schritt **1** mit Hilfe des Zuordnungs- und Auswahlmoduls folgende Rahmendaten elektronisch erfasst:
■ Wandfarbe,
■ Armaturenfarbe,
■ Wannen- und Bodenfarbe,
■ Wandstärke,
■ Wannenmaterial.

Das Zuordnungs- und Auswahlmodul zeigt aufgrund der sich hierdurch ergebenden Spezifikation automatisch die hierfür technisch zulässige Maßblattübersicht an. Das geeignete elektronische Maßblatt wird weiterhin mit dem Zuordnungs- und Auswahlmodul ausgewählt.
Mit Hilfe des Konfigurations-Regel-Verarbeitungsmoduls werden nun im zweiten Schritt **2** die sogenannten Maßblattparameter elektronisch erfasst. Dies kann mittels Tastatur, graphischer Eingabegeräte, aber auch mittels elektronischer Meßwerkzeuge mit Kopplung an das Notebook (Laptop) geschehen. Diese Daten werden nun vom Konfigurations-Regel-Verarbeitungsmodul anhand der im Konfigurations-Regel-Speicherbereich hinterlegten, das dynamische Wissen über die zulässige Konfiguration repräsentierenden Regeln auf technische Plausibilität überprüft, wobei gegebenenfalls eine Korrektur oder Warnung angezeigt wird. Nur bei technisch vollständig korrekter Konfiguration wird eine maßstabsgetreue graphische Anzeige dieser Konfiguration angezeigt. Zur Verdeutlichung der geometrischen Situation werden dabei Wandschrägen vorzugsweise übertrieben dargestellt; der Grad der Verzerrung ist hierbei frei einstellbar. Das ursprüngliche elektronische Maßblatt liegt dabei weiterhin vor. Seine Konturen werden dabei vorzugsweise gestrichelt dargestellt, die Konturen des neuen Systems sind durchgezogen und farblich frei einstellbar. Hier kann eine erste visuelle Überprüfung durch den Fachinstallateur vorgenommen werden, zu verändernde Parameter können manuell eingegeben oder auch mittels der zur Verfügung stehenden sonstigen Eingabemittel elektronisch erfasst werden.
Spezielle Rahmenbedingungen können es erforderlich machen, den ersten Schritt **1** des erfindungsgemäßen Verfahrens mit Hilfe des Zuordnungs- und
Auswahlmoduls zu iterieren (d. h. zu wiederholen), um etwa dort durch Vorauswahl einer Serie bzw. durch Eingabe bestimmter Parameter (z. B. mögliche Festfeldbreite), die Plausibilitätsprüfung im elektronischen Maßblatt danach einzuschränken.
Dabei erscheint eine Auflistung aller nun möglichen, auf die Einbausituation passenden Ausführungen, gruppiert nach Dichtheitsklasse und nach Preislistenreihenfolge. Die Beratungsmöglichkeit durch den Fachinstallateur wird dabei durch hinterlegte Bilder verbessert.
Nach Anwahl der gewünschten Dichtheitsklasse kann eine Ausführung maßstabsgetreu betrachtet werden. Bei bestimmten Duschkabinen kann eine Kollisionsprüfung mit Hilfe eines Kollisionsprüf-Moduls vor so nicht erkennbaren Schwierigkeiten in der räumlichen Anordnung warnen. Dies Kollisionsprüf-Modul kann extra angewählt werden. Alle maßstabsgetreuen graphischen Anzeigen des Sanitärsystems, vorzugsweise der Duschkabine, können vor Ort auch ausgedruckt werden. Die passende Ausführung wird nun angewählt sowie Sonderwünsche eingetragen (wie etwa bemaltes Türglas).
Wunschliefertermine können vorzugsweise ebenfalls vom System aufgenommen werden. Für die nun erstellte Wunschkombination kann dabei auch der Bruttopreis berechnet werden.

Der Kunde kann nun wählen, ob er einen Auftrag erteilen will oder ob ein schriftliches Angebot erstellt werden soll. Je nach Wahl erhält die Aufmaßnummer eine unterschiedliche Statuskennzahl. Eine Aufmaßbestätigung wird gedruckt und vom Kunden unterzeichnet.

Im Rahmen des dritten Schrittes **3** des erfindungsgemäßen Verfahrens koppelt der Fachinstallateur sein Notebook vorzugsweise täglich einmal zeitweise mit einem Server in der Zentrale des Sanitärsystemherstellers, wobei dieser Server nun einen eigenen zweiten Speicher **5** und eine eigene zweite Informationsverarbeitungseinheit aufweist, die Zugriff auf diesen zweiten Speicher **5** hat und ein Bauteile-Speicherbereich und ein Produktionsdaten-Regel-Speicherbereich in diesem zweiten Speicher **5** liegen.

Während dieser zeitweisen Kopplung **6** wird eine Datenübermittlung **7** derart vorgenommen, dass hierbei die beiden Informationsverarbeitungseinheiten die Aufmaßdaten aus dem Aufmaßdaten-Speicherbereich, auf den die erste Informationsverarbeitungseinheit Zugriff hat, in einen weiteren Aufmaßdaten-Speicherbereich, auf den die zweite Informationsverarbeitungseinheit Zugriff hat, übertragen und somit die Aufmaßdaten vom Notebook auf den Server übertragen werden.

Hierbei können nicht nur Daten zum Server übermittelt, sondern auch neue Daten und Datensätze vom Server auf das Laptop gespielt werden, etwa um die den Konfigurationsdaten-Speicherbereich und/oder den Konfigurations-Regelspeicherbereich mit den aktuellen statischen Konfigurationsdaten und dynamischen Konfigurationsregeln auf den neuesten Stand zu bringen. Hierdurch kann eine vollständige Datensynchronizität gewährleistet werden.

Aus den zum Server übermittelten Daten können dort nun vorzugsweise Angebote automatisch erstellt werden.

Bestelldaten und Wunschkombination werden verglichen und danach zur Produktion freigegeben. Etwaige Änderungen können manuell angepasst werden.

Der Server enthält, wie bereits erwähnt, alle erforderlichen Komponenten des erfindungsgemäßen Expertensystems zur Durchführung des dritten Schrittes **3** des erfindungsgemäßen Verfahrens, nämlich eine zweite Informationsverarbeitungseinheit, ein Produktionsdaten-Regel-Verarbeitungsmodul, welches die zweite Informationsverarbeitungseinheit zu seinem Betrieb verwendet, sowie einen zweiten Speicher **5**, wobei die zweite Informationsverarbeitungseinheit Zugriff auf diesen zweiten Speicher **5** hat, und der zweite Speicher **5** zumindest die folgenden Daten-Bereiche aufweist, nämlich einen Produktionsdaten-Regel-Speicherbereich, einen Bauteile-Speicherbereich und einen Aufmaßdaten-Speicherbereich, wobei das Produktionsdaten-Regel-Verarbeitungsmodul im Wege der Verwendung der zweiten Informationsverarbeitungseinheit Zugriff auf den Produktionsdaten-Regel-Speicherbereich, den Bauteile-Speicherbereich und den Aufmaßdaten-Speicherbereich hat.

Nach der Übertragung der Aufmaßdaten vom Notebook auf den Server wird dort der dritte Schritt **3** des erfindungsgemäßen Verfahrens durchgeführt.

Das Produktionsdaten-Regel-Verarbeitungs-Modul ordnet hierbei vorzugsweise den Aufmaßdaten in diesem Schritt die genauen Materialien, Materialstärken sowie die Anzahl und Größe weiterer Bauteile zu, die im Bauteile-Speicherbereich hinterlegt sind. Die hierzu nötigen Regeln aus dem Produktionsdaten-Regelspeicherbereich sind immer aktuell zu halten, da sowohl die Entwickler und Konstrukteure als auch die Logistiker die sich ständig ändernden Rahmendaten nicht nur auf technische Zulässigkeit, sondern auch auf Verfügbarkeit der zu beschaffenden Materialien und Komponenten prüfen, so können etwa ebenfalls auch Lagerdaten ein Bestandteil der durchzuführenden Selektion sein.

Ergebnis dieses letzten Schrittes **3** nach dem erfindungsgemäßen Verfahren ist nun eine technische Repräsentation einer möglichen räumlichen Anordnung, vorzugsweise eine CAD-Zeichnung der notwendigen Komponenten des zu konfigurierenden Sanitärsystems, sowie eine Bauteile-Stückliste.

Alle eingegebenen Daten können darüber hinaus von einem Innendienstmitarbeiter in einem Statistikmodul gesammelt und ausgewertet werden.

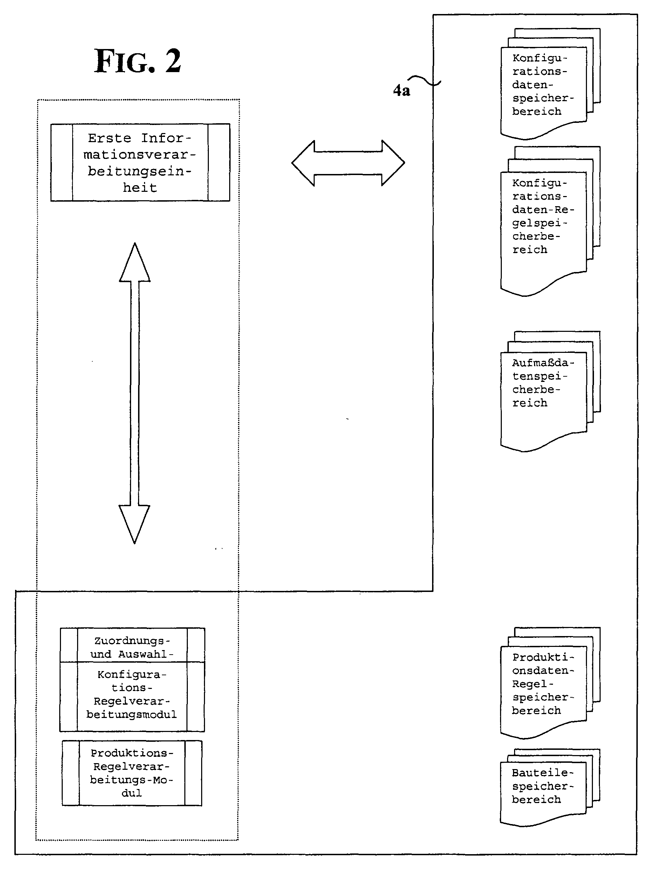

Fig. **2** zeigt den Aufbau des Expertensystems ohne getrennte Informationsverarbeitungseinheiten gleichfalls in einer Schemadarstellung und zwar nach Patentanspruch **1**, nämlich mit einer Informationsverarbeitungseinheit, einem Zuordnungs-und-Auswahl-Modul, einem Konfigurations-Regelverarbeitungs-Modul und einem Produktions-Regelverarbeitungs-Modul, welche jeweils die erste Informationsverarbeitungseinheit zu ihrem Betrieb verwenden, mindestens einem Speicher **4a** , wobei die erste Informationsverarbeitungseinheit Zugriff auf den ersten Speicher **4a** hat, und wobei der Speicher **4a** zumindest die folgenden Daten-Bereiche aufweist, nämlich einen Bauteile-Speicherbereich, welcher die zur Konfiguration notwendigen technischen Daten der hierzu verwendbaren Bauteile enthält, vorzugsweise Fertigungsmaße, Gewichte, Bauteiltypen oder Statikdaten der Bauteile, einen Konfigurationsdaten-Speicherbereich, welcher statisches Wissen über die technische Zulässigkeit von Konfigurationsvarianten des zu konfigurierenden Sanitärsytems enthält, und einen Konfigurationsdaten-Regel-Speicherbereich, welcher Regeln enthält, die dynamisches Wissen über die Zulässigkeit von technischen Konfigurationsvarianten des zu konfigurierenden Sanitärsystems repräsentieren, einen Produktionsdaten-Regel-Speicherbereich, welcher Regeln enthält, die dynamisches Wissen über die Zulässigkeit von Produktionsvarianten des zu konfigurierenden Sanitärsystems repräsentieren, und einen Aufmaßdaten-Speicherbereich, welcher elektronisch erfasste Aufmaßwerte und/oder die von dem System erzeugten Aufmaßdaten, vorzugsweise Abmaße der verwendeten Bauteile enthält, wobei das Zuordnungs-und-Auswahl-Modul Zugriff auf den Konfigurationsdaten-Speicherbereich hat, wobei das Konfigurations-Regelverarbeitungs-Modul Zugriff auf den Konfigurationsdaten-Regel-Speicherbereich und den Aufmaßdaten-Speicherbereich hat, und das Produktions-Regelverarbeitungs-Modul Zugriff auf den Produktionsdaten-Regel-Speicherbereich, den Aufmaßdaten-Speicherbereich und den Bauteile-Speicherbereich hat. Somit zeigt Fig. 2 eine Ausführungsform eines Expertensystems nach der vorliegenden Erfindung, die vollständig auf einem Rechner, etwa einem Notebook realisiert werden kann.

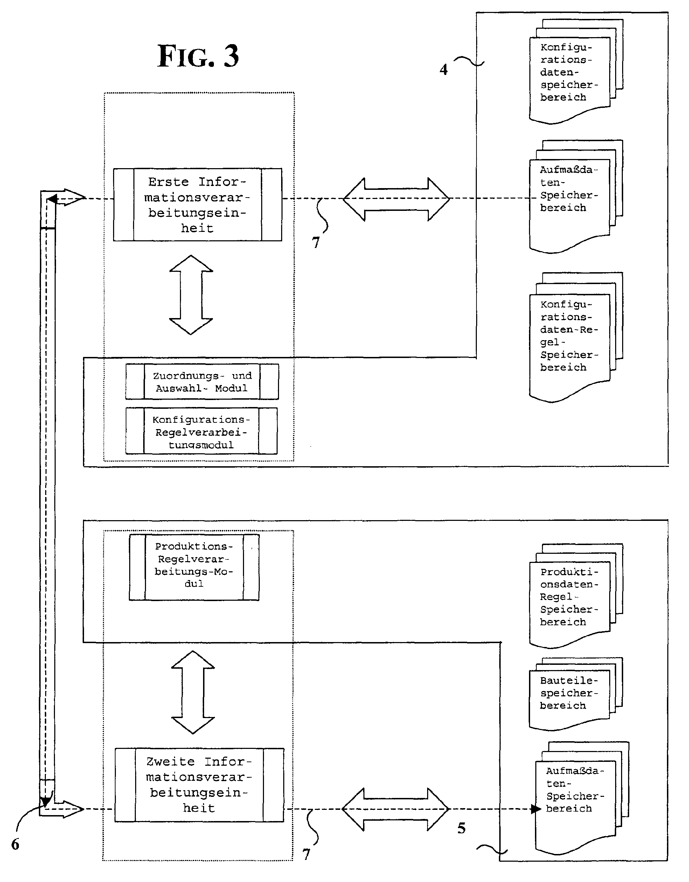

Fig. **3** zeigt hingegen den Aufbau des Expertensystems mit getrennten Informationsverarbeitungseinheiten ebenfalls in schematischer Darstellung und somit eine Ausführungsform eines Expertensystems nach der vorliegenden Erfindung, die sich zur Implementation auf jeweils zwei voneinander getrennten Rechnern, etwa einem Notebook und einem Server, eignet. Dabei weist das Expertensystem neben dem vorzugsweise auf dem Notebook gelegenen ersten Speicher **4** mindestens einen zweiten Speicher **5** und eine zweite Informationsverarbeitungseinheit auf, wobei die zweite Informationsverarbeitungseinheit Zugriff auf den zweiten Speicher **5** hat und die beiden Informationsverarbeitungseinheiten zumindest zeitweise miteinander gekoppelt **6** sind und der Konfigurationsdaten-Speicherbereich und der Konfigurationsdaten-Regel-Speicherbereich in dem ersten Speicher **4** und der Bauteile-Speicherbereich und der Produktionsdaten-Regel-Speicherbereich in dem zweiten Speicher **5** liegen. Während dieser zeitweisen Kopplung **6** wird eine Datenübermittlung **7** derart vorgenommen, dass hierbei die beiden Informationsverarbeitungseinheiten die Aufmaßdaten aus dem Aufmaßdaten-Speicherbereich, auf den die erste Informationsverarbeitungseinheit Zugriff hat, in einen weiteren Aufmaßdaten-Speicherbereich, auf den die zweite Informationsverarbeitungseinheit Zugriff hat, übertragen werden, somit die Aufmaßdaten vom Notebook auf den Server übertragen werden.

## Patentansprüche

1. Expertensystem zur Konfiguration von Sanitärsystemen, vorzugsweise Duschkabinen, welches aufgrund einer vorgegebenen Spezifikation eine technische Repräsentation einer möglichen räumlichen Anordnung, vorzugsweise eine CAD-Zeichnung der notwendigen Komponenten des zu konfigurierenden Sanitärsystems, sowie eine Bauteile-Stückliste dieses Systems ermittelt, mit
mindestens einer Informationsverarbeitungseinheit,
einem Zuordnungs-und-Auswahl-Modul,
einem Konfigurations-Regelverarbeitungs-Modul und
einem Produktions-Regelverarbeitungs-Modul,
welche jeweils die erste Informationsverarbeitungseinheit zu ihrem Betrieb verwenden,
mindestens einem Speicher (**4, 4a**), wobei die erste Informationsverarbeitungseinheit Zugriff auf den ersten Speicher hat, und
wobei der Speicher (**4, 4a**) oder die Speicher zumindest die folgenden Daten-Bereiche aufweist oder aufweisen, nämlich
einen Bauteile-Speicherbereich, welcher
die zur Konfiguration notwendigen technischen Daten der hierzu verwendbaren Bauteile enthält, vorzugsweise Fertigungsmaße, Gewichte, Bauteiltypen oder Statikdaten der Bauteile,
einen Konfigurationsdaten-Speicherbereich, welcher
statisches Wissen über die technische Zulässigkeit von Konfigurationsvarianten des zu konfigurierenden Sanitärsytems enthält, und
einen Konfigurationsdaten-Regel-Speicherbereich, welcher
Regeln enthält, welche dynamisches Wissen über die Zulässigkeit von technischen Konfigurationsvarianten des zu konfigurierenden Sanitärsystems repräsentieren,
einen Produktionsdaten-Regel-Speicherbereich, welcher
Regeln enthält, welche dynamisches Wissen über die Zulässigkeit von Produktionsvarianten des zu konfigurierenden Sanitärsystems repräsentieren,
und einen Aufmaßdaten-Speicherbereich, welcher
elektronisch erfasste Aufmaßwerte und/oder die von dem System erzeugten Aufmaßdaten, vorzugsweise Abmaße der verwendeten Bauteile enthält,
wobei das Zuordnungs-und-Auswahl-Modul Zugriff auf den Konfigurationsdaten-Speicherbereich hat,
wobei das Konfigurations-Regelverarbeitungs-Modul Zugriff auf den Konfigurationsdaten-Regel-Speicherbereich und den Aufmaßdaten-Speicherbereich hat und
das Produktions-Regelverarbeitungs-Modul Zugriff auf den Produktionsdaten-Regel-Speicherbereich, den Aufmaßdaten-Speicherbereich und den Bauteile-Speicherbereich hat.

2. Expertensystem zur Konfiguration von Sanitärsystemen nach Anspruch 1, **dadurch gekennzeichnet, dass** das Expertensystem mindestens einen zweiten Speicher (**5**) und eine zweite Informationsverarbeitungseinheit aufweist und die zweite Informationsverarbeitungseinheit Zugriff auf den zweiten Speicher (**5**) hat, wobei die beiden Informationsverarbeitungseinheiten zumindest zeitweise miteinander gekoppelt (**6**) sind und der Konfigurationsdaten-Speicherbereich und der Konfigurationsdaten-Regel-Speicherbereich in dem ersten Speicher (**4**) und der Bauteile-Speicherbereich und der Produktionsdaten-Regel-Speicherbereich in dem zweiten Speicher (**5**) liegen.

3. Expertensystem zur Konfiguration von Sanitärsystemen nach Anspruch 1 oder 2, **dadurch gekennzeichnet, dass**
weiterhin ein Graphik-Modul vorgesehen ist, welches Mittel zur parameterweisen elektronischen Erfassung der Aufmaßwerte und Mittel zur Erzeugung und/oder Anpassung einer graphischen Repräsentation, vorzugsweise einer technischen Skizze oder Zeichnung, des zu konfigurierenden Sanitärsystems anhand der elektronisch erfassten Aufmaßwerte aufweist.

4. Expertensystem zur Konfiguration von Sanitärsystemen nach Anspruch 3, **dadurch gekennzeichnet, dass**
als Mittel zur parameterweisen elektronischen Erfassung der Aufmaßwerte ein Eingabe-Modul zur Erfassung der Aufmaßwerte über eine Tastatur vorgesehen ist.

5. Expertensystem zur Konfiguration von Sanitärsystemen nach Anspruch 3, **dadurch gekennzeichnet, dass**
als Mittel zur parameterweisen elektronischen Erfassung der Aufmaßwerte ein graphisch orientiertes Eingabemittel, vorzugsweise eine Maus oder ein Touchpad, zur Erfassung der Aufmaßwerte vorgesehen ist.

6. Expertensystem zur Konfiguration von Sanitärsystemen nach Anspruch 4 oder 5, **dadurch gekennzeichnet, dass**
die Tastatur oder das graphisch orientierte Eingabemittel während der elektronischen Erfassung der Aufmaßwerte so auf das Mittel zur Erzeugung und/oder Anpassung einer graphischen Repräsentation einwirkt, dass die jeweilige graphische Repräsentation unmittelbar entsprechend den elektronisch erfassten Aufmaßwerten angepasst wird.

7. Expertensystem zur Konfiguration von Sanitärsystemen nach einem der Ansprüche 3 bis 6, **dadurch gekennzeichnet, dass**
weiterhin ein Kollisionsprüf-Modul vorgesehen ist, welches Mittel zur elektronischen Erfassung von geometrischen Umfelddaten und Mittel zur Kollisionsprüfung von beweglichen Komponenten des zu konfigurierenden Sanitärsystems mit Fremdkomponenten aufweist, wobei die Fremdkomponenten durch die elektronisch erfassten Umfelddaten charakterisiert werden.

8. Verfahren zur Konfiguration von Sanitärsystemen, vorzugsweise Duschkabinen zum Betrieb eines Expertensystems nach Anspruch 1, wobei aufgrund einer vorgegebenen Spezifikation eine technische Repräsentation einer möglichen räumlichen Anordnung, vorzugsweise eine CAD-Zeichnung der notwendigen Komponenten des zu konfigurierenden Sanitärsystems, sowie eine Bauteile-Stückliste dieses Systems ermittelt wird, wobei
a1) in einem ersten Schritt (**1**) zunächst die technische Spezifikation elektronisch erfasst wird, indem technische Daten, vorzugsweise etwa die Raumgeometrie und/oder Sanitärsystemgeometrie erfasst werden, wobei die Zulässigkeit der jeweiligen technischen Spezifikation anhand der im Konfigurationsdaten-Speicherbereich hinterlegten statischen Zulässigkeitskriterien geprüft und nur technisch erlaubte Konfigurationen zugelassen werden, wodurch eine technisch zulässige statische Konfiguration des Sanitärsystems aus der Spezifikation elektronisch erzeugt wird,
a2) in einem zweiten Schritt (**2**) parallel zum ersten Schritt a1) (**1**) oder auch nach dem ersten Schritt a1) (**1**) weiterhin die Aufmaßwerte elektronisch erfasst werden, vorzugsweise etwa Länge, Breite, Höhe des zu konfigurierenden Sanitärsystems, und hieraus sowie aus der im ersten Schritt a1) (**1**) ermittelten jeweiligen zulässigen technischen Konfiguration wie auch anhand der im Konfigurationsdaten-Regel-Speicherbereich hinterlegten, das dynamische Wissen über die Zulässigkeit von Konfigurationsvarianten des zu konfigurierenden Sanitärsystems repräsentierenden Regeln, Aufmaßdaten elektronisch erzeugt und im Aufmaßdaten-Speicherbereich abgelegt werden,
b) sodann
in einem dritten Schritt (**3**) aus den im zweiten Schritt a2) (**2**) elektronisch erzeugten Aufmaßdaten und der im Bauteile-Speicherbereich hinterlegten Bauteile-Daten sowie anhand der im Produktionsdaten-Regel-Speicherbereich hinterlegten, das dynamische Wissen über die Zulässigkeit von Produktionsvarianten des zu konfigurierenden Sanitärsystems repräsentierenden Regeln eine technische Repräsentation einer möglichen räumlichen Anordnung, vorzugsweise eine CAD-Zeichnung der notwendigen Bauteile des zu konfigurierenden Sanitärsystems, sowie eine Bauteile-Stückliste des zu konfigurierenden Sanitärsystems elektronisch erzeugt werden.

9. Verfahren zur Konfiguration von Sanitärsystemen, vorzugsweise Duschkabinen, nach Anspruch 8 zum Betrieb eines Expertensystems nach Anspruch 1, **dadurch gekennzeichnet, dass**
der erste Schritt a1) (**1**) und/oder der zweite Schritt a2) (**2**) des Verfahrens nach Anspruch 8 beliebig oft iteriert werden können.

10. Verfahren zur Konfiguration von Sanitärsystemen, vorzugsweise Duschkabinen nach Anspruch 8 zum Betrieb eines Expertensystems nach Anspruch 1, **dadurch gekennzeichnet, dass**
der dritte Schritt b) (**3**) beliebig oft iteriert werden kann.

11. Verfahren zur Konfiguration von Sanitärsystemen, vorzugsweise Duschkabinen, nach Anspruch 8, 9 oder 10 zum Betrieb eines Expertensystems nach Anspruch 1, **dadurch gekennzeichnet, dass** nach dem dritten Schritt b) (**3**) Änderungen der Bauteile-Stückliste elektronisch erfasst werden.

12. Verfahren zur Konfiguration von Sanitärsystemen, vorzugsweise Duschkabinen, nach einem der Ansprüche 8 bis 11 zum Betrieb eines Expertensystems nach Anspruch 1, **dadurch gekennzeichnet, dass** in einem weiteren Zwischenschritt nach dem zweiten Schritt a2) (**2**) und vor dem dritten Schritt b) (**3**)
a3) geometrische Umfelddaten elektronisch erfasst werden, welche Fremdkomponenten charakterisieren, die sich im geometrischen Umfeld des Sanitärsystems befinden und dass anhand dieser Umfelddaten eine elektronische Kollisionsprüfung von beweglichen Komponenten des zu konfigurierenden Sanitärsystems mit den Fremdkomponenenten durchgeführt wird.

13. Verfahren zur Konfiguration von Sanitärsystemen, vorzugsweise Duschkabinen, nach Anspruch 8, 9, 10 oder 11 zum Betrieb eines Expertensystems nach Anspruch 2, **dadurch gekennzeichnet, dass**
die ersten beiden Schritte a1) (**1**) und a2) (**2**) auf einer ersten Informationsverarbeitungseinheit und der dritte Schritt b) (**3**) auf einer zweiten Informationsverarbeitungseinheit ablaufen, wobei während der Kopplung (**6**) der beiden Informationsverarbeitungseinheiten die Aufmaßdaten aus dem Aufmaßdaten-Speicherbereich auf den die erste Informationsverarbeitungseinheit Zugriff hat, in einen weiteren Aufmaßdaten-Speicherbereich, auf den die zweite Informationsverarbeitungseinheit Zugriff hat, übertragen werden.

14. Verfahren zur Konfiguration von Sanitärsystemen, vorzugsweise Duschkabinen, nach Anspruch 12 zum Betrieb eines Expertensystems nach Anspruch 8, **dadurch gekennzeichnet, dass**
in einem weiteren Zwischenschritt nach dem zweiten Schritt a2) (**2**) und vor dem dritten Schritt b) (**3**)
a3) geometrische Umfelddaten elektronisch erfasst werden, welche Fremdkomponenten charakterisieren, die sich im geometrischen Umfeld des Sanitärsystems befinden und dass anhand dieser Umfelddaten eine elektronische Kollisionsprüfung von beweglichen Komponenten des zu konfigurierenden Sanitärsystems mit den Fremdkomponenenten durchgeführt wird.
